# EUROPEAN PATENT APPLICATION

(11) **EP 4 336 778 A1**
(43) Date of publication of application: **13.03.2024**
(21) Application number: 22196437.2
(22) Date of filing: 19.09.2022
(51) Int. Cl.: H04L 9/40, G06F 21/55

(54) **CYBER THREAT SENSOR INFORMING ABOUT THE BREAKDOWN OF INFORMATION SYSTEMS**

(30) Priority: 12.09.2022 PL 44224722
(71) Applicant: Esecure Sp. z o.o., 35-016 Rzesnów (PL)
(72) Inventor: Gortat, Krzysztof, 35-606 Rzeszow (PL)
(74) Representative: Tyrala, Magdalena

(57) **Abstract**

The cyber threat sensor informing about the breakdown of IT systems is characterized by the fact that it consists of a network and power element (1) responsible for power supply and network communication, within which data is transferred to the analytical and control system (3), while in the case of problems with the power system (1), the battery of the power backup system (2) is used, and the data transferred to the analytical and control system (3) are analyzed and saved in the available area of the disk space (4).

## Description

The subject of the invention is a cyber threat sensor informing about the breakdown of IT systems. This device signals and informs about the occurrence of infection of the IT system by malware and detection of an ongoing cyber attack.

The security systems known in the state of art are currently used to protect against cyber threats, and are characterized by two response mechanisms, i.e. blocking the cyber threat and generating an alert (warnings against a potential cyber threat in the form of a security incident). Blocking a cyber threat is possible only when all information sets related to the input data of the analyzed event are identified in the security system. If certain conditions are met (e.g. in the form of analytical security rules), it is possible to perform an action to block the threat. The activation of this mechanism is therefore only possible when security systems have all the necessary information that allows them to react in such a way. Data interpretation must be precise, otherwise the action should not be carried out. In the event of ambiguous detections, security systems only generate an alarm that must be verified either by another security system or by a cyber security expert operator. The classification of an event as a potential threat is often delayed, and requires specialized solutions and dedicated experts who can interpret the results, which translates into delays in the implementation of the task, which are often dictated by limited costs for the implementation of these tasks in the small and medium-sized enterprise sector.

The aim of the invention is to develop an electronic device in the form of a cyber threat sensor that informs in real time about the breakdown of information systems in the organization.

The cyber threat sensor according to the invention is characterized by the fact that it consists of a network and power element responsible for power supply and for network communication, within which data is transferred to the analytical and control system, and in the event of problems with the power system, the backup battery is used and the data transferred to the analytical and control system are analyzed and saved in the available area of the disk space.

It is advantageous when the analytical and control system run a firmware system that uses a closed area of the disk space and RAM memory to perform calculations of the requesting subsystem.

It is also advantageous if the analytical and control system generates a control signal when the power support system is started and activates the alarm siren (6).

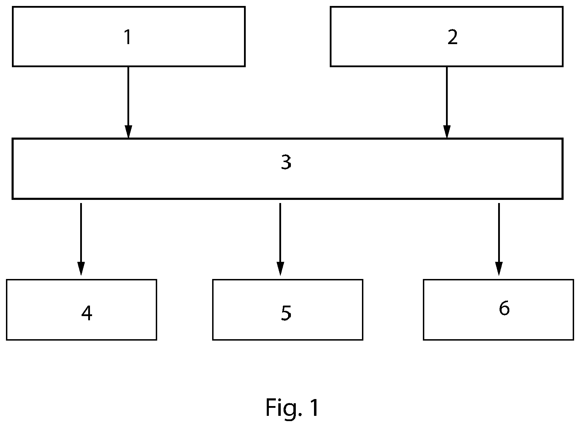

The subject of the invention has been shown in an exemplary embodiment in the drawing, in which Fig. 1 shows a block diagram of the device according to the invention. As shown in the diagram, element 1 is responsible for power supply and for network communication, within which data is transferred to the analytical and control system 3. In case of problems with the power system 1, the battery of the power backup system is used 2. Data sent to the analytical and control system 3 are analyzed and saved in the available area of the disk space 4. As part of the analytical and control system 3, a system (firmware) operates, which uses the closed area of the disk space 4 and RAM 5, to perform the calculations of the requesting subsystem. In the event of a deviation from the profile of the standard activity of the IP address or the activation of the power support system 2, a control signal is generated by the analytical and control system 3 and the alarm siren 6 is activated.

In an exemplary application, the device works on the basis of data based on events, building a profile of activity of individual IP addresses in the organization. The alerts received are included in the standard number of identical events that occur during normal business hours for the organization. At the time of data analysis, it shows that for specific IP addresses the number of events of a specific type increases, e.g. the number of failed logins increases several times over a specific period of time, or there is an increased and sustained data transfer from / or to a specific IP. Based on the analysis of the collected historical data and the transmitted alarm from network security systems, the device registers a deviation and generates an alarm that triggers an audible signal.

Element 1 responsible for network communication and supplying the entire internal electronic analytical and control system 3 will be based on Power Over Ethernet (PoE) technology. If a power failure is detected, the device uses a battery 2 to maintain operation and activate the acoustic signaling. The operating status of the device is controlled by a micro switch that allows it to be started and a signaling diode, which in the case of normal operation gives a signal in the form of a continuous light, and in the case of no signal in the PoE socket, the diode gives a signal in the form of a dashed light. In the event of a power failure or network communication failure, siren 6 is triggered as this is also a security incident. The cyber threat sensor enables receiving events directly from the organization's security systems or receiving logs using the SYSLOG protocol, which is the basis for the cyber threat propagation detection algorithm. Received data is transferred to the analytical and control system, which is responsible for their correct interpretation. A correctly received data packet may contain one or more alarms. The cyber threat sensor is based on a single-board industrial computer integrated with an alarm loudspeaker 6, a battery backup system 2 and disk space 4 for collecting analytical data proving the ongoing cyber threat. The data received by the analytical and control module 3 are processed and interpreted for the purpose of executing the control operation. The system operates on this module and RAM 5, i.e. firmware which, based on the implemented rules of operation, automatically reacts to the propagation of a cyber threat and generates a signal alerting the organization about it.

The cyber threat sensor receives both types of events that result from actions taken by security devices, i.e. a message summarizing the blocking of a cyber threat and an alarm warning against a potential cyber threat in the form of a security incident, resulting from the fact that their certainty is not 100%. The sensor disk space 4 is designed to physically store data and is divided into two logical areas, partitions, i.e. blocked data space for system files that make up the embedded firmware, and the space used by the analytical and control module for the purpose of collecting data necessary to generate an alarm. The analytical and control module 3 consists of two basic subsystems for the needs of analytical calculations and a control system for generating a signal for the activation of the alarm siren 6. The analytical subsystems include a data collection system and an inference system. The data collection subsystem is responsible for keeping a record of the number and types of alerts for each IP address. The collected data is stored in the disk space available for this purpose. The collected data includes the following parameters: IP address to which the registered event relates, ID of the event source, ID of the event type, and the number of unique events for each IP address. Identifiers, both of the source and the type of event (alarm), are calculated on the basis of the hash function from the defined alarm fields, different depending on whether it concerns the source of the alarm or its type.

The second element is a requesting subsystem that generates a profile of normal activity of the IP address taking into account the number of alarms, their type and source in relation to the time unit. If any source in relation to the historical data generates deviations in relation to the historical data, and their quantity and type significantly deviate from the learned state, a control signal will be generated defining a cyber alarm, which is responsible for activating the alarm siren 6, which will allow the IT department to stop the cyber threat.. The sensor, which is the subject of the invention, enables early detection of cyber threats by entrepreneurs who do not have the financial resources to purchase expensive SIEM (Security information and event Management) or XDR (Extended detection Response) solutions and provide experts who have the competence to manage them by building a management center Security Operations Center. The system is maintenance-free, which enables its wide application in organizations - especially in the sector of small and medium-sized enterprises. The IT department receives clear and quick information in the form of an alarm signal, which results from the analysis of events received from security systems. The device is not only a relay of information about the incident that has occurred, i.e. blocking a cyber threat or an alarm that requires service, but also has built-in business logic that analyzes the incoming data. An alarm signal is triggered when the incoming data deviates from the typical activity profile of the IP address. The device can be used in organizations (especially in the SME sector), which due to costs cannot afford to have a qualified SOC team or to purchase expensive tools for event analysis. The device is dedicated to IT teams, one of whose tasks is to ensure ICT security. It allows you to receive logs and events from security systems and provides analysis and detection of anomalies in the form of deviations in the operation of IT devices. At the same time, it provides quick alarming in the event of meeting the conditions of an alarm, about which the operator should be informed. The sensor through the network interface will allow for integration with security systems, thus enabling the measurement of the current state of cyber security of the organization. If a threat is detected, the device will activate an alarm siren similarly to other alarm systems, e.g. fire alarm systems. The device is thus a development of alarm systems with the aspect of cyber threats.

## Claims

1. Cyber threat sensor informing about the breakdown of IT systems, **characterized in that** it consists of a network and power element (1) responsible for power supply and network communication, within which data is transferred to the analytical and control system (3), where in case of problems with the power supply system (1), the battery of the power backup system (2) is used, and the data transferred to the analytical and control system (3) are analyzed and saved in the available area of the disk space (4).

2. Cyber threat sensor informing about the breakdown of information systems according to claim 1, **characterized in that** within the analytical and control system (3), a firmware system operates, which uses a closed area of the disk space (4) and RAM memory (5) to perform calculations of the requesting subsystem.

3. Cyber threat sensor informing about a break in information systems according to claim 1, **characterized in that** the analytical and control system (3) generates a control signal in the event of starting the power supply system (2) and activates the alarm siren (6).
